# EUROPEAN PATENT APPLICATION

(11) **EP 4 793 481 A1**
(43) Date of publication of application: **19.08.2026**
(21) Application number: 25158047.8
(22) Date of filing: 14.02.2025
(51) Int. Cl.: F02D 41/00, F02D 41/12, F02D 41/14, F02D 41/24, F02D 35/00, G01M 15/11, F02D 41/08

(54) **A METHOD FOR A COMBUSTION ENGINE OF A VEHICLE, A SYSTEM FOR A COMBUSTION ENGINE OF A VEHICLE, AND A VEHICLE COMPRISING THE SYSTEM**

(71) Applicant: Scania CV AB, 151 87 Södertälje (SE)
(72) Inventor: WAHLSTEN, Markus, Södertälje (SE); SIMOVITS, Astrid, Södertälje (SE)
(74) Representative: Scania CV AB

(57) **Abstract**

A method for a combustion engine (200) of a vehicle is presented. The combustion engine comprises:
- a first group (225a) of two or more cylinders (220a-d) connected to a first exhaust gas manifold (240a) comprising a first pressure sensor (241a); and
- a second group (225b) of two or more cylinders connected to a second exhaust gas manifold (240b) comprising a second pressure sensor (241b).

The method performed during normal operation of the combustion engine comprises:
- inducing at least one fuel cutoff for at least one (220a) of the four or more cylinders (220a-h);
- measuring at least one first and at least one second misfire pressure responses by utilization of the first and second pressure sensors, respectively;
- determining at least one misfire template for the combustion engine individual based on the at least one first and the at least one second misfire pressure responses.

## Description

### Technical field

The present invention relates to misfire detection for a combustion engine of a vehicle, in particular to a method for a combustion engine, a system for a combustion engine, and a vehicle comprising the system.

The invention also relates to a computer program and a computer program product, which implement the method according to the invention.

### Background

The following background description constitutes a description of the background to the present invention, and thus need not necessarily constitute prior art.

Vehicles, for example heavy vehicles such as trucks, may be propelled by a combustion engine. The combustion engine may suffer from misfire in one or more of its cylinders. A misfire in a cylinder may occur because of failure to inject fuel into the cylinder, or because of a combustion not taking place although fuel is injected into the cylinder. Misfires cause engine malfunction. Also, misfire due to non-combustion of injected fuel causes the injected fuel to travel with the exhaust gases through the exhaust treatment system, which may affect the exhaust treatment and the components of the exhaust treatment system. The misfire may thus cause higher exhaust gas emissions. Too high exhaust gas emissions are bad for the environment, and do also not fulfil current exhaust gas legislation.

To make sure that occurring misfires in a combustion engine are not neglected, there is in some jurisdictions specific legislation for engine misfire detection, which needs to be fulfilled by the vehicle in operation, both for an idling combustion engine in a still standing vehicle and for a combustion engine propelling the vehicle.

### Summary

There are various conventional methods for misfire detection. The most common methods are using vibration analysis or analysis of an angular velocity of the flywheel. The vibration analysis methods typically require some sort of knock sensor. The output from the knock sensor is filtered and, depending on the energy content of the filtered output, a classification of misfires and combustions is performed. Angular velocity-based methods typically analyze a drop in angular speed when a misfire occurs. The angular speed methods therefore require high precision speed sensors to be accurate.

There are also conventional methods that detect misfire based on exhaust pressure. These methods are dependent on correct measurements of the absolute pressure levels. The pressure-based algorithms for misfire detection therefore need extensive calibration to be accurately performed, due to the different pressure behaviour at different engine speed load points.

Such extensive calibration is time consuming. Also, the risk for false detection of misfire due to unrobust or incorrect calibration is increased due to the extensive calibration needed. The calibration further requires a lot of an available calibration memory area to be used for misfire detection purposes. This reduces the memory area available for other calibration parameters in the vehicle.

Further, some conventional misfire detection methods are designed to be performed in a workshop, such as conventional misfire detection methods based on exhaust pressure. Such misfire detection obviously results in costly vehicle off road time, i.e. in time periods during which the vehicle cannot be used for performing its normal duties and generating income for its owner.

The demands for more efficient and accurate detection of engine misfire are increasing.

There is thus a need to provide more efficient and accurate methods for combustion engine misfire detection, that reduce the vehicle off road time. An improved reliability regarding misfire detection is also needed.

An objective of the present invention is to at least partly solve the above stated problems.

An objective of the present invention is thus to improve a reliability associated with misfire detection for a combustion engine.

A further objective of the present invention is to improve an efficiency of a misfire detection.

A further objective of the present invention is to improve a robustness of a misfire detection.

A further objective of the present invention is to reduce the vehicle off road time associated with misfire detection.

The objectives are according to an aspect achieved through the above mentioned method for a combustion engine of a vehicle, the combustion engine comprising four or more cylinders divided into:
- a first group of two or more cylinders connected to a first exhaust gas manifold, the first exhaust gas manifold comprising a first pressure sensor; and
- a second group of two or more cylinders connected to a second exhaust gas manifold, the second exhaust gas manifold comprising a second pressure sensor; wherein
the method comprises a control unit performing the following steps:
- inducing at least one fuel cutoff for at least one of the four or more cylinders during a normal operation of the combustion engine;
- measuring at least one first misfire pressure response P_{resp_a} resulting from the at least one fuel cutoff by utilization of the first pressure sensor;
- measuring at least one second misfire pressure response P_{resp_b} resulting from the at least one fuel cutoff by utilization of the second pressure sensor;
- determining at least one misfire template T_{misfire_a}, T_{misfire_b} specifically for the combustion engine individual based on the at least one first misfire pressure response P_{resp_a} and the at least one second misfire pressure response P_{resp_b}.

An intrusive approach for inducing fuel cutoffs during normal operation of the combustion engine and the vehicle in order to determine misfire templates is presented. Intentional fuel cutoffs are thus induced in order to determine the misfire templates. The misfire templates may thereafter be utilized for identifying combustion engine misfires during normal operation of the vehicle. Thus, the setup/preparation for misfire detection, and also the misfire detection as such, is according to the herein presented solution performed when the vehicle is normally operated on the road. Hereby, costly vehicle off road time is avoided when performing misfire detection.

The misfire templates, which may for example comprise crank angle resolved exhaust pressure traces from the at least one cylinder for which the fuel was cut, are determined and stored to be utilized for the following misfire detection. The stored misfire templates are in the following misfire detection used for analysis/classification of at least one operation pressure response during normal operation of the vehicle.

The herein presented solution exploits the engine individual stability feature of the misfire templates, i.e. that a misfire template determined for one specific combustion engine individual does not change significantly over time for that combustion engine individual. Thus the determined misfire templates may with high accuracy be utilized for later misfire detection.

The presented solution may be accurately used for efficiently and accurately detecting misfires for a combustion engine at various vehicle speeds and vehicle loads.

The presented solution may also be used for misfire detection for a combustion engine idling in a still standing vehicle. Misfire detection for idling combustion engines is normally challenging for conventional solutions, due to the small fuel amounts being injected during idling.

The utilization of two pressure sensors, i.e. the use of the first pressure sensor configured in the first exhaust gas manifold to measure a first misfire pressure response, and the second pressure sensor configured in the second exhaust gas manifold to measure a second misfire pressure response, considerably increases the accuracy and robustness of the method. The utilization of two pressure sensors prevents the various pressure responses resulting from the misfires to interfere with each other. It is hereby for example prevented that the various pressure responses resulting from the misfires cancel each other out.

Also, the utilization of two pressure sensors, i.e. the use of the first pressure sensor and the second pressure sensor, makes it possible to separate pressure pulses originating form misfires in different cylinders. It is hereby possible to distinguish pressure pulses caused by misfires in different cylinders. Thus, the utilization of two pressure sensors makes it possible to induce simultaneous fuel cutoffs for two or more cylinders, and to be able to determine from which cylinder each of the resulting pressure pulses originate.

The herein presented solution provides for an efficient, robust and accurate misfire detection. Hereby, excessive exhaust emission and/or combustion engine malfunction due to misfires may be quickly and accurately mitigated.

According to an embodiment, the method further comprises:
- measuring at least one first operation pressure response OP_{resp_a} by utilization of the first pressure sensor during a normal operation of the combustion engine;
- measuring at least one second operation pressure response OP_{resp_b} by utilization of the second pressure sensor during a normal operation of the combustion engine;
- determining at least one operation pressure measure OPMₐ, OPM_{b} based on the at least one first operation pressure response OP_{resp_a} and the at least one second operation pressure response OP_{resp_b};
- detecting at least one combustion engine misfire based on the at least one operation pressure measure OPMₐ, OPM_{b} and the at least one misfire template T_{misfire_a}, T_{misfire_b}.

The herein presented misfire detection is performed during normal operation of the vehicle, which reduces the vehicle off road time for the vehicle. Previously determined misfire templates are here utilized for the misfire detection. After the misfire templates have been determined/created, no further intentional fuel cutoffs are induced. Instead, the determined misfire templates are utilized for comparison during normal vehicle operation without intentional fuel cutoffs. A previously determined misfire template may with high accuracy be utilized in the misfire detection, since a misfire template determined for one specific combustion engine individual does not change significantly over time, and may later with high accuracy be utilized for that combustion engine individual.

The herein presented solution provides for an efficient, robust and accurate misfire detection, such that excessive exhaust emission and/or combustion engine malfunction due to misfires may be quickly and accurately mitigated.

According to an embodiment, the determination of the at least one operation pressure measure OPMₐ, OPM_{b} comprises:
- associating one or more operation pressure values OPVₐ, OPV_{b} of one or more of the at least one operation pressure measure OPMₐ, OPM_{b} with one or more in the group of:
   - an engine crank angle;
   - an engine speed w; and
   - an engine load.

Hereby, the one or more operation pressure values OPVₐ, OPV_{b} are resolved with respect to the engine crank angle, the engine speed and/or the engine load, such that they may be compared to the at least one misfire template also being resolved with respect to the engine crank angle, the engine speed and/or the engine load.

According to an embodiment, the determination of the at least one operation pressure measure OPMₐ, OPM_{b} comprises:
- normalizing one or more operation pressure values OPVₐ, OPV_{b} of one or more of the at least one operation pressure measure OPMₐ, OPM_{b}.

The normalizing of the one or more operation pressure values OPVₐ, OPV_{b} cancels any possible off-set errors associated with the first and/or second pressure sensors, and thus improves the accuracy of the misfire detection. Also, the normalized one or more operation pressure values OPVₐ, OPV_{b} may easily be compared to normalized one or more template pressure values V_{temp_a}, V_{temp_b}.

According to an embodiment, the detection of the at least one combustion engine misfire comprises:
- determining one or more differences D₁, D₂, .. Dₙ between one or more operation pressure values OPVₐ, OPV_{b} of one or more of the at least one operation pressure measure OPMₐ, OPM_{b} and one or more corresponding template pressure values V_{temp_a}, V_{temp_b} of one or more of the at least one misfire template T_{misfire_a}, T_{misfire_b}; and
- comparing the one or more differences D₁, D₂, .. Dₙ with one or more misfire difference thresholds D_{1_th}, D_{2_th}, ..., D_{n_th}, respectively.

It is hereby efficiently determined if the at least one operation pressure measure OPMₐ, OPM_{b} resembles the at least one misfire template T_{misfire_a}, T_{misfire_b} or not. Single differences, multiple differences and/or essentially any suitable difference sum may here be used for comparisons with single difference thresholds, multiple difference thresholds and/or essentially any suitable difference threshold sum, respectively, in order to provide efficient comparisons.

According to an embodiment, the one or more misfire difference thresholds D_{1_th}, D_{2_th}, ..., D_{n_th} are determined by adjusting one or more already existing difference thresholds D_{1_th_exist}, D_{2_th_exist}, ..., D_{n_th_exist} during a normal operation of the combustion engine based on a comparison of the at least one determined misfire template T_{misfire_a}, T_{misfire_b} and at least one already existing misfire template T_{misfire_a_exist}, T_{misfire_b_exist}.

Thus, the one or more misfire difference thresholds D_{1_th}, D_{2_th}, ..., D_{n_th} are here efficiently determined by adaption of existing threshold values D_{1_th_exist}, D_{2_th_exist}, ..., D_{n_th_exist} in correspondence with, or based on, the determination of the at least one determined misfire template T_{misfire_a}, T_{misfire_b} by adaption of the at least one already existing misfire template T_{misfire_a_exist}, T_{misfire_b_exist}, which reduces the computational complexity.

According to an embodiment, each of the at least one fuel cutoff comprises a fuel cutoff for one of the four or more cylinders of the combustion engine.

The single cylinder fuel cutoff has the advantage that it is easy to know from which cylinder a certain pressure pulse in the at least one first misfire pressure response P_{resp_a} and/or the at least one second misfire pressure response P_{resp_b} originates.

According to an embodiment, each of the at least one fuel cutoff comprises a fuel cutoff for two or more of the four or more cylinders of the combustion engine.

Thanks to the utilization of two pressure sensors in the presented solution, i.e. the first pressure sensor in the first exhaust gas manifold and the second pressure sensor in the second exhaust gas manifold, it is possible to distinguish fuel cutoffs in two or more cylinders from each other. To simultaneously cut the fuel off for two or more cylinders reduces the total time needed to cut off the fuel for each of the four or more cylinders. Thus, the time needed for the misfire detection is hereby reduced.

According to an embodiment, the determination of the at least one misfire template T_{misfire_a}, T_{misfire_b} comprises:
- associating one or more template pressure values V_{temp_a}, V_{temp_b} of one or more of the at least one misfire template T_{misfire_a}, T_{misfire_b} with one or more in the group of:
   - an engine crank angle;
   - an engine speed w; and
   - an engine load.

Hereby, the at least one misfire template is resolved with respect to the engine crank angle, the engine speed and/or the engine load, such that it may easily be compared to the one or more operation pressure values that are also resolved with respect to the engine crank angle, the engine speed and/or the engine load.

According to an embodiment, the determination of the at least one misfire template T_{misfire_a}, T_{misfire_b} comprises:
- normalizing one or more template pressure values V_{temp_a}, V_{temp_b} of one or more of the at least one misfire template T_{misfire_a}, T_{misfire_b}.

The normalizing of the one or more template pressure values V_{temp_a}, V_{temp_b} cancels any possible off-set errors associated with the first and/or second pressure sensors, and thus improves the overall accuracy of the misfire detection. Also, the normalized one or more template pressure values V_{temp_a}, V_{temp_b} may easily be compared to the normalized one or more operation pressure values OPVₐ, OPV_{b}.

According to an embodiment, the determination of the at least one misfire template T_{misfire_a}, T_{misfire_b} comprises:
- adjusting at least one already existing misfire template T_{misfire_a_exist}, T_{misfire_b_exist} based on the at least one first misfire pressure response P_{resp_a} and the at least one second misfire pressure response P_{resp_b}.

Hereby, the additional computational complexity for determination of the at least one misfire template T_{misfire_a}, T_{misfire_b} is reduced.

According to an embodiment, the adjustment of the at least one already existing misfire template T_{misfire_a_exist}, T_{misfire_b_exist} comprises:
- calculating one or more moving averages of one or more template pressure values V_{temp_a_exist}, V_{temp_b_exist} of one or more of the at least one already existing misfire template T_{misfire_a_exist}, T_{misfire_b_exist}, one or more first misfire pressure values V_{resp_a} of one or more of the at least one first misfire pressure response P_{resp_a}, and one or more second misfire pressure values V_{resp_b} of one or more of the at least one second misfire pressure response P_{resp_b}, respectively.

Moving averages may be efficiently calculated such that the determination of the at least one misfire template T_{misfire_a}, T_{misfire_b} is performed with minimal additional computational complexity.

According to an embodiment, the at least one already existing misfire template T_{misfire_a_exist}, T_{misfire_b_exist} has been determined by utilization of one in the group of:
- at least one induced fuel cutoff for at least one of the four or more cylinders during normal operation of the combustion engine;
- at least one induced fuel cutoff for at least one of the four or more cylinders in a workshop; and
- at least one induced fuel cutoff for at least one of the four or more cylinders during production of the combustion engine.

There are thus various ways and opportunities for determining the at least one already existing misfire template T_{misfire_a_exist}, T_{misfire_b_exist}. Hereby, it is possible to choose a determination of the at least one already existing misfire template T_{misfire_a_exist}, T_{misfire_b_exist} which suitable for the current implementation.

According to an embodiment, the normal operation of the combustion engine comprises one or more in the group of:
- the vehicle being propelled by the combustion engine; and
- the combustion engine idling in the still standing vehicle.

Thus, the determination of the at least one misfire template T_{misfire_a}, T_{misfire_b} for the individual combustion engine, and also the combustion engine misfire detection for that combustion engine individual may be performed when the vehicle is in use, i.e. without taking the vehicle to a workshop. The costly vehicle off road time for the vehicle is hereby reduced.

The above-mentioned objectives are according to an aspect achieved also through the above-mentioned system for a combustion engine of a vehicle, wherein the combustion engine comprises four or more cylinders divided into:
- a first group of two or more cylinders connected to a first exhaust gas manifold, the first exhaust gas manifold comprising a first pressure sensor; and
- a second group of two or more cylinders connected to a second exhaust gas manifold, the second exhaust gas manifold comprising a second pressure sensor. The system comprises a control unit configured to:
   - induce at least one fuel cutoff for at least one of the four or more cylinders during a normal operation of the combustion engine;
   - measure at least one first misfire pressure response P_{resp_a} resulting from the at least one fuel cutoff by utilization of the first pressure sensor;
   - measure at least one second misfire pressure response P_{resp_b} resulting from the at least one fuel cutoff by utilization of the second pressure sensor;
   - determine at least one misfire template T_{misfire_a}, T_{misfire_b} specifically for the combustion engine individual based on the at least one first misfire pressure response P_{resp_a} and the at least one second misfire pressure response P_{resp_b}.

The system has corresponding advantages as stated above for the method for a combustion engine of a vehicle.

The above-mentioned objectives are according to an aspect achieved also through the above-mentioned vehicle, the vehicle comprising:
- a combustion engine; and
- a herein described system.

The vehicle has corresponding advantages as stated above for the method for a combustion engine of a vehicle.

The above-mentioned objective is also achieved through the above-mentioned computer program and computer program product.

The computer program and computer program product, respectively, has corresponding advantages as stated above for the heating arrangement.

### Brief list of figures

The invention will be illustrated in more detail below, along with the enclosed drawings, where similar references are used for similar parts, and where:
Figure 1 shows an example vehicle which may comprise a system according to various embodiments of the present invention,
Figure 2 shows some parts of a combustion engine,
Figure 3 shows some parts of a combustion engine,
Figure 4 shows a flow chart for the method for a combustion engine of a vehicle according to some aspects and embodiments of the invention,
Figures 5a-f show some non-limiting examples of the herein described first misfire pressure response P_{resp_a}, second misfire pressure response P_{resp_b}, at least one misfire template T_{misfire_a}, T_{misfire_b}, first operation pressure response OP_{resp_a}, second operation pressure response OP_{resp_b}, at least one operation pressure measure OPMₐ, OPM_{b}, and one or more differences D₁, D₂, .. Dₙ, and

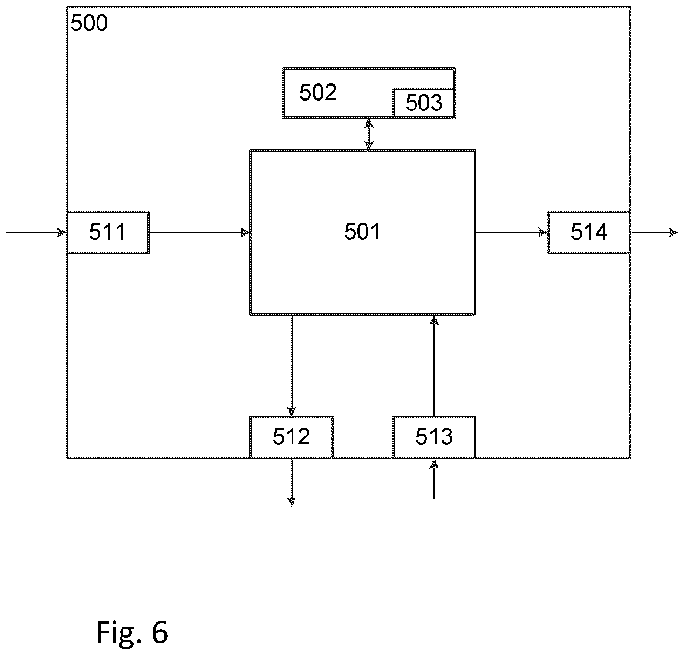

Figure 6 shows a control device according to the present invention.

### Detailed description

In this document, if a feature is arranged as something or is arranged to do something, this means that the feature may be configured as this something or is configured to do/perform this something. Thus, the wording arranged as may be interpreted as synonymous with configured as, and the wording arranged to may be interpreted as synonymous with configured to, in the meaning that the features is designed/constructed/produced to provide certain characteristics or a certain behavior.

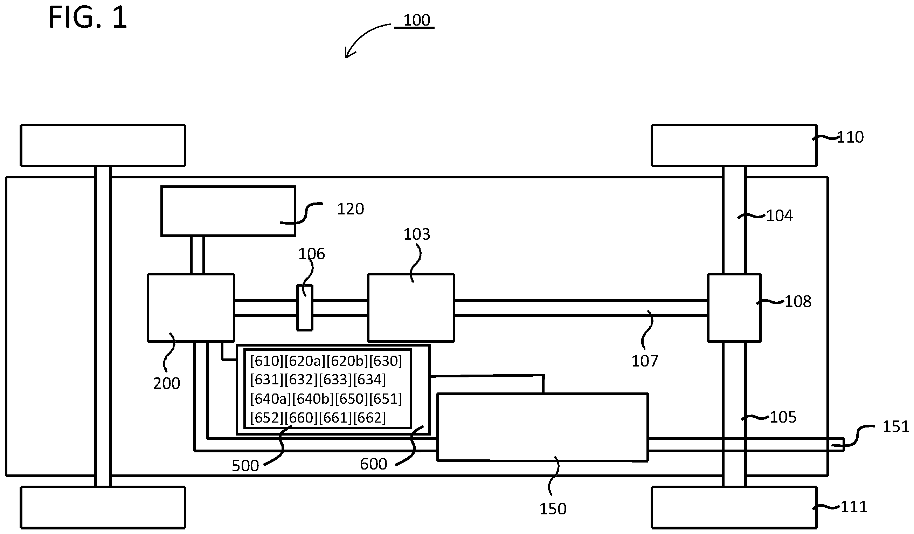

Figure 1 schematically shows an example vehicle 100 comprising a powertrain including a combustion engine 200, such as an internal combustion engine, which in a customary manner, via an output shaft of the combustion engine 200 is connected to a gearbox 103 via a clutch 106. An output shaft from the gearbox 103 may drive the wheels 111, 110 e.g. via a final drive 108, such as e.g. a customary differential, and the drive shafts 104, 105 connected to the final drive 108.

The combustion engine 200 is connected to a fuel tank 120, comprising the fuel needed for the combustion in the combustion engine 200. The combustion engine 200 may be controlled by the engine's control system via a control unit/device 500. Also, the clutch 106 and the gearbox 103 may be controlled by the vehicle's control system, with the help of one or more applicable control units/devices (not shown). Naturally, the vehicle's powertrain may also be of another type, such as a type with a conventional automatic gearbox, or a type with a hybrid driveline, etc. The exemplified vehicle 100 may be an autonomous vehicle. The vehicle according to the present disclosure could be any vehicle operated by means of an internal combustion engine.

The vehicle 100 also comprises an exhaust treatment/purification system 150 for treatment/purification of exhaust emissions resulting from combustion in the combustion chamber of the combustion engine 200. The exhaust treatment system 150 may be controlled by the control unit 500.

The vehicle 100 comprises, according to an embodiment, a control device 500 configured for performing the herein described aspects and/or embodiments. The vehicle 100 is thus, configured to perform the herein presented aspects and/or embodiments.

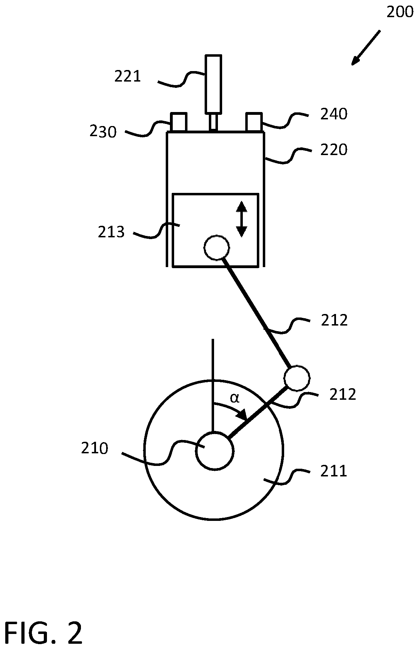

Figure 2 schematically illustrates some part of the combustions engine 200 according to various embodiments of the present disclosure. The combustion engine 200 comprises a crankshaft 210 connected to a flywheel 211. The combustion engine 200 further comprises four or more cylinders divided into a first group of two or more cylinders and a second group of two or more cylinders distributed along the crankshaft 210 for rotating the crankshaft 210 during operation of the engine by the combustions in the four or more cylinders. In figure 2, one such cylinder 220 is shown for simplicity.

The cylinder 220 is connected to the crankshaft 210 via one or more connecting rods 212 connected to a piston 213 configured inside the cylinder 220. Each cylinder 220 of the four or more cylinders is arranged to house such a piston 213. The piston 213 is configured to be movable within the cylinder 220 for performing strokes associated with the combustions in the cylinder 220.

The engine 200 comprises one or more fuel injectors 221 configured to inject fuel into each cylinder 220. The fuel is used for the combustion in the cylinder 220.

The engine 200 may for example be configured to provide a four stroke cycle. The complete four stroke cycle forms a single thermodynamic cycle from which mechanical work will be extracted for operating the vehicle 100. For a complete four stroke cycle the crankshaft 210 will turn two revolutions to complete the engine cycle.

The position of the piston 213 when being farthest from the crankshaft 210 during the cycle is known as the top dead centre (TDC), and the position of the piston 231 when being closest to the crankshaft 210 is known as the bottom dead centre (BDC). A so-called dead centre is when the connecting rod 212 and the crankshaft 210 align.

The engine cycle comprises an intake stroke, during which the piston 213 moves from the top dead centre towards the bottom dead centre when filling the cylinder 220 with air.

The engine cycle further comprises a compression stroke, during which the piston 213 moves from the bottom dead centre towards the top dead centre when the air in the cylinder is compressed, and at the end of which fuel is injected into the cylinder 220 for combustion.

The engine cycle further comprises an expansion stroke, during which the piston 213 moves from the top dead centre towards the bottom dead centre when the combustion is completed.

The engine cycle further comprises an exhaust stroke, during which the piston 213 moves from the bottom dead centre towards the top dead centre when emitting exhaust gases from the combustion in the cylinder 220.

The crankshaft angle α may, according to an embodiment, be determined by means of an angle sensor arranged in connection to the crank shaft 210, the rod 212 and/or the flywheel 211.

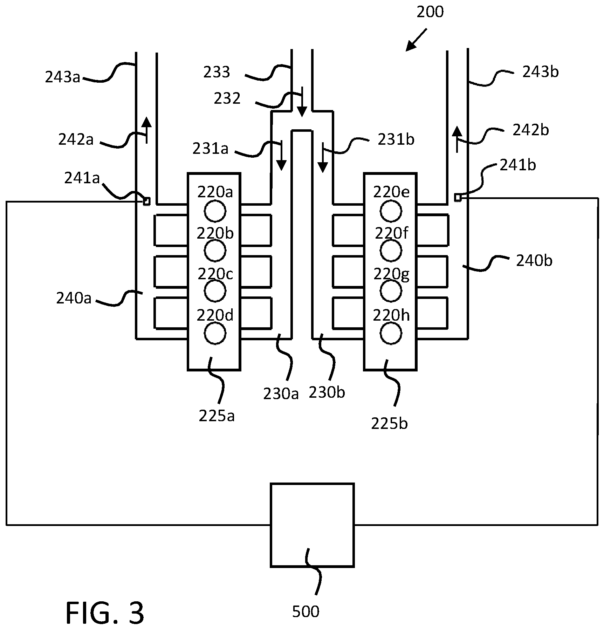

The engine comprises an intake manifold arrangement 230 for providing compressed air to the cylinders of the engine. In figure 2, a portion of the intake manifold arrangement 230 leading to the cylinder 220 is shown. The intake manifold arrangement 230 is described in more detail below with reference to figure 3.

The combustion engine 200 further comprises an exhaust manifold arrangement 240 configure to provide exhaust gas from the cylinders of the combustion engine 200 to the exhaust treatment system 150. In figure 2, a portion of the exhaust manifold arrangement 240 leading exhaust gas from the 220 is shown. The exhaust manifold arrangement 240 is described in more detail below with reference to figure 3.

The engine 200 further comprises an intake valve for each cylinder for allowing compressed air into the respective cylinder in the intake stroke. The intake valve is typically arranged in the intake manifold arrangement 230. The engine 200 may further comprises an exhaust valve for each cylinder for allowing exhaust gas out of the cylinder 220 in the exhaust stroke. The exhaust valve is typically arranged in the exhaust manifold arrangement 240.

The engine 200 may, according to an embodiment, comprise an exhaust gas recirculation (EGR) arrangement.

Figure 3 is a schematic and non-limiting illustration of some parts of a combustion engine 200, and an air flow through these parts during operation of the combustion engine 200, according to some embodiments. The combustion engine 200 may for example comprise eight cylinders 220a-h, that are divided into a first group 225a of four cylinders 220a-d, which may be housed in a first engine block, and a second group 225b of four cylinders 220e-h, which may be housed in a second engine block.

Each of the four cylinders 220a-d of the first group 225a is connected to a first air inlet manifold 230a, and is also connected to a first exhaust gas manifold 240a. Thus, the four cylinders 220a-d of the first group 225a are provided with inlet air for the combustion from the first air inlet manifold 230a, and output exhausts from the combustion to the first exhaust gas manifold 240a. The first exhaust gas manifold 240a comprises a first pressure sensor 241a configured for sensing a current pressure in the first exhaust gas manifold 240a. The first pressure sensor 241a is connected to a control unit 500 and is configured to provide the sensed pressure values to the control unit 500.

The first pressure sensor 241a in the first exhaust gas manifold 240a is configured to sense/measure the pressure in the first exhaust gas manifold 240a, where the pressure is caused by the combustion in one or more of the four cylinders 220a-d of the first group 225a connected to the first exhaust gas manifold 240a. The pressure may here be measured associated with for example a certain range of crank angles, engine speeds and/or engine loads, such that a pressure sample value pattern is determined associated with these combustion conditions. According to some embodiments, two or more first pressure sensors 241a may be configured to sense the pressure in the first exhaust gas manifold 240a.

Correspondingly, each of the four cylinders 220e-h of the second group 225b is connected to a second air inlet manifold 230b, and is also connected to a second exhaust gas manifold 240b. Thus, the four cylinders 220e-h of the second group 225b are provided with inlet air for the combustion from the second air inlet manifold 230b, and output exhausts from the combustion to the second exhaust gas manifold 240b. The second exhaust gas manifold 240b comprises a second pressure sensor 241b configured for sensing a current pressure in the second exhaust gas manifold 240a. The second pressure sensor 241b is connected to a control unit 500 and is configured to provide the sensed pressure values to the control unit 500.

The second pressure sensor 241b in the second exhaust gas manifold 240b is configured to sense/measure the pressure in the second exhaust gas manifold 240b, where the pressure is caused by the combustion in one or more of the four cylinders 220e-h of the second group 225b connected to the second exhaust gas manifold 240b. The pressure may here be measured associated with for example a certain range of crank angles, engine speeds and/or engine loads, such that a pressure sample value pattern is determined associated with these combustion conditions. According to some embodiments, two or more second pressure sensors 241b may be configured to sense the pressure in the second exhaust gas manifold 240b.

The combustion engine may be any suitable combustion engine with essentially any suitable number of four or more cylinders. The engine could for example be a 6-cylinder engine or an 8-cylinder engine. The cylinders could have any suitable configuration, for example an inline configuration or a V-configuration.

The above mentioned four strokes comprise an intake stroke filling the cylinders 220a-h with air, a compression stroke in which the air is compressed in the cylinders 220a-h and at the end of which fuel is injected for combustion, an expansion stroke in which the combustion is completed within the cylinders 220a-h, and an exhaust stroke in which the exhausts are output from the cylinders 220a-h.

According to various embodiments, the combustion engine 200 may comprise an air filter, through which ambient air is arranged to pass on its way to the cylinders 220ah, a turbocharger arranged to compress the filtered air, and/or an intercooler arranged for cooling the compressed air before it is provided to the first air inlet manifold 230a and the second air inlet manifold 230b.

The first exhaust gas manifold 240a and the second exhaust gas manifold 240b are configured to distribute exhaust gas from the cylinders 220a-h towards the exhaust treatment system 150. According to various embodiment, the combustion engine may further comprise a turbocharger, a waste gate and/or an exhaust gas brake configured to interact with the exhaust gas provided by the first exhaust gas manifold 240a and the second exhaust gas manifold 240b.

According to an aspect, method 400 for a combustion engine 200 of a vehicle 100 is presented. The combustion engine 200 comprises four or more cylinders, such as e.g. eight cylinders 220a-h as illustrated in figure 3. The four or more cylinders 220ah are divided into a first group 225a of two or more cylinders 220a-d, which is connected to a first exhaust gas manifold 240a comprising a first pressure sensor 241a, and a second group 225b of two or more cylinders connected to a second exhaust gas manifold 240b comprising a second pressure sensor 241b.

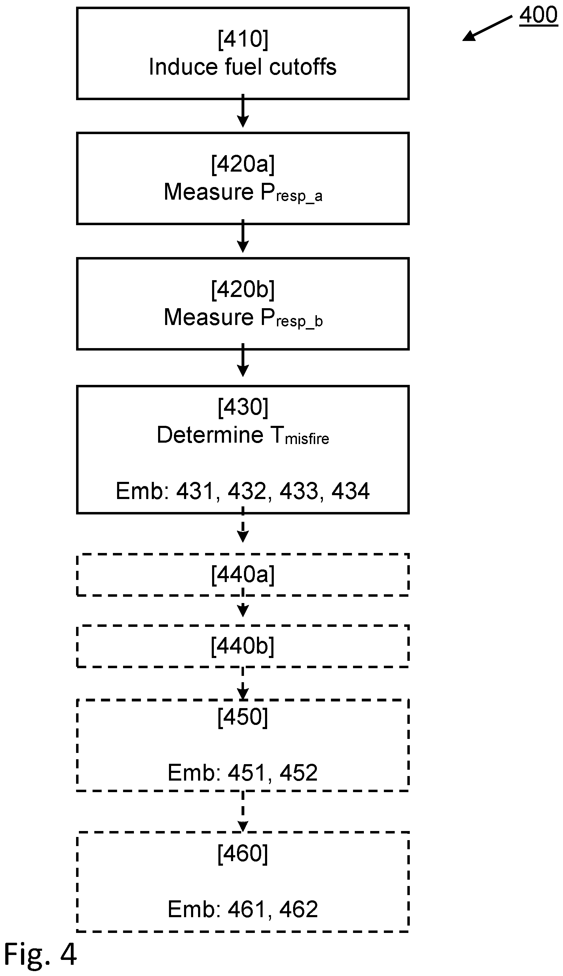

The method 400 comprises the following steps illustrated in figure 4, and performed by control unit 500 during normal operation of the combustion engine 200. Normal operation of the combustion engine 200 in this document comprises that the vehicle 100 is propelled by the combustion engine 200 and/or that the combustion engine 200 is idling in a still standing vehicle 100. The method 400 may perform one or more of the herein described steps in parallel, i.e. simultaneously, and/or in another order as illustrated in figure 4.

In a step 410 of the method, at least one fuel cutoff is induced for at least one cylinder, for example a first cylinder 220a, of the four or more cylinders 220a-h during normal operation of the combustion engine 200. Thus, at least one intrusive fuel cutoff is here performed for at least one cylinder during its normal operation.

According to an embodiment, each of the at least one fuel cutoff here stops the fuel being provided to one cylinder, e.g. the first cylinder 220a, of the combustion engine 200.

According to another embodiment, each of the at least one fuel cutoff here stops the fuel being provided to two or more cylinders, e.g. the first 220a and the fifth 220e cylinders, of the combustion engine 220.

In a further step 420a of the method 400, at least one first misfire pressure response P_{resp_a} resulting from the at least one fuel cutoff is measured by utilization of the first pressure sensor 421a configured in the first exhaust gas manifold 240a. According to an embodiment, each of the at least one first misfire pressure response P_{resp_a} comprises n misfire response values V_{resp_a_1}, V_{resp_a_1},..., V_{resp_a_n}.

In a further step 420b of the method 400, at least one second misfire pressure response P_{resp_b} resulting from the at least one fuel cutoff is measured by utilization of the second pressure sensor 421b configured in the second exhaust gas manifold 240b. According to an embodiment, each of the at least one second misfire pressure response P_{resp_b} comprises n misfire response values V_{resp_b_1}, V_{resp_b_1},..., V_{resp_b_n}.

In a further step 430 of the method 400, at least one misfire template T_{misfire_a}, T_{misfire_b} is determined specifically for the combustion engine individual 200. The at least one misfire template T_{misfire_a}, T_{misfire_b} is determined based on the at least one first misfire pressure response P_{resp_a} and the at least one second misfire pressure response P_{resp_b}. Thus, least one individualized misfire template T_{misfire_a}, T_{misfire_b} is here determined specifically for the combustion engine being measured during normal operation of the vehicle 100. According to an embodiment, each of the at least one misfire template T_{misfire_a}, T_{misfire_b} comprises n template pressure values V_{temp_a_1}, V_{temp_a_2}, ..., V_{temp_a_n}; V_{temp_b_1}, V_{temp_b_2}, ..., V_{temp_b_n}.

Hereby, at least one misfire template T_{misfire_a}, T_{misfire_b} is determined for the specific combustion engine 200 individual for which the first misfire pressure response P_{resp_a} and the at least one second misfire pressure response P_{resp_b} are measured. This at least one misfire template T_{misfire_a}, T_{misfire_b} may thereafter be utilized for misfire detection for the same combustion engine individual 200.

According to an embodiment, a first misfire template T_{misfire_a} is determined based on the at least one first misfire pressure response P_{resp_a} and a second misfire template T_{misfire_b} is determined based on the at least one second misfire pressure response P_{resp_b}. According to an embodiment, a combined misfire template T_{misfire} is determined based on both of the at least one first misfire pressure response P_{resp_a} and the at least one second misfire pressure response P_{resp_b}.

According to the method 400, the at least one misfire template T_{misfire_a}, T_{misfire_b} is determined based on at least one fuel cutoff for at least one cylinder. This means that one or more intentional fuel cutoffs may be performed for each of the four or more cylinders 220a-h. Corresponding at least one first misfire pressure response P_{resp_a} and at least one second misfire pressure response P_{resp_b} are determined based on these fuel cutoffs, such that the at least one misfire template T_{misfire_a}, T_{misfire_b} is reliably and robustly determined during normal operation of the combustion engine 200.

According to an embodiment, the determination 430 of the at least one misfire template T_{misfire_a}, T_{misfire_b}, comprises a determination of the one or more template pressure values V_{temp_a}, V_{temp_b} of the at least one misfire template T_{misfire_a}, T_{misfire_b}, respectively. For example, a first set of n template pressure values V_{temp_a_1}, V_{temp_a_2}, ..., V_{temp_a_n} are determined for a first misfire template T_{misfire_a}, and a second set of n template pressure values V_{temp_a_n}; V_{temp_b_1}, V_{temp_b_2}, ..., V_{temp_b_n} are determined for a second misfire template T_{misfire_b}. Each of these one or more template pressure values V_{temp_a_1}, V_{temp_a_2}, ..., V_{temp_a_n}; V_{temp_b_1}, V_{temp_b_2}, ..., V_{temp_b_n} is then associated with an engine crank angle α, an engine speed ω, and/or an engine load for the combustion engine 200. For example, the one or more template pressure values V_{temp_a_1}, V_{temp_a_2}, ..., V_{temp_a_n}; V_{temp_b_1}, V_{temp_b_2}, ..., V_{temp_b_n} may be represented a function of the engine crank angle α, the engine speed ω, and/or the engine load.

According to an embodiment, one or more template pressure values V_{temp_a}, V_{temp_b} of the at least one misfire template T_{misfire_a}, T_{misfire_b} may be normalized 432, thereby determining 430 the at least one misfire template T_{misfire_a}, T_{misfire_b} as at least one normalized misfire template T_{misfire_a_norm}, T_{misfire_b_norm}.

According to an embodiment, the determination 430 of the at least one misfire template T_{misfire_a}, T_{misfire_b} comprises updating at least one initially already existing misfire template T_{misfire_a_exist}, T_{misfire_b_exist}. The at least one already existing misfire template T_{misfire_a_exist}, T_{misfire_b_exist} is here adjusted 433 based on the at least one first misfire pressure response P_{resp_a} and the at least one second misfire pressure response P_{resp_b}. Thus, the during normal operation measured at least one first P_{resp_a} and second P_{resp_b} misfire pressure responses are here used for adapting the at least one already existing misfire template T_{misfire_a_exist}, T_{misfire_b_exist} to the current combustion engine conditions.

The adjustment/adaption 433 of the at least one already existing misfire template T_{misfire_a_exist}, T_{misfire_b_exist} based on the measured at least one first P_{resp_a} and second P_{resp_b} misfire pressure responses, respectively, may utilize calculated moving averages for the values involved. Thus, one or more moving averages may be calculated 434 for one or more template pressure values V_{temp_a_exist}, V_{temp_b_exist} of one or more of the at least one already existing misfire template T_{misfire_a_exist}, T_{misfire_b_exist}, one or more first misfire pressure values V_{resp_a} of one or more of the at least one first misfire pressure response P_{resp_a}, and one or more second misfire pressure values V_{resp_b} of one or more of the at least one second misfire pressure response P_{resp_b}.

For example, a specific existing first template pressure value V_{temp_a_exist_1} may be adjusted 433 by a moving average function applied on the specific existing first template pressure value V_{temp_a_exist_1}, a corresponding specific first misfire pressure value V_{resp_a_1} and/or a corresponding specific second misfire pressure value V_{resp_b_1}, and so on for the n values V_{temp_a_exist_1}, V_{temp_a_exist_2}, ... V_{temp_a_exist_n} of the first existing misfire template T_{misfirea exist}. The hereby adjusted/updated 433 first existing misfire template is then determined 430 as the first misfire template T_{misfire_a}. Correspondingly, a second misfire template T_{misfire_b} may be determined 430 by utilization of a corresponding moving average function applied to the existing second template pressure values V_{temp_b_exist} of the second existing misfire template T_{misfire_b_exist}, the corresponding first misfire pressure values V_{resp_a} and corresponding second misfire pressure values V_{resp_b}, respectively.

The at least one already existing misfire template T_{misfire_a_exist}, T_{misfire_b_exist} may, according to an embodiment, have been determined by utilization of at least one induced fuel cutoff for at least one 220a of the four or more cylinders 220a-h during normal operation of the combustion engine 200. The at least one already existing misfire template T_{misfire_a_exist}, T_{misfire_b_exist} may also, according to some embodiments, have been determined by utilization of at least one induced fuel cutoff for at least one 220a of the four or more cylinders 220a-h in a workshop and/or during production of the combustion engine 200.

Above, it is explained how the at least one misfire template T_{misfire_a}, T_{misfire_b}, which is specific/personal for the combustion engine individual 200 of the vehicle 100, may be determined is determined 430 during normal operation of the combustion engine 200 based on the at least one first misfire pressure response P_{resp_a} provided by the first pressure sensor 241a and the at least one second misfire pressure response P_{resp_b} provided by the second pressure sensor 241b, in reaction to intentional fuel cutoffs..

The determined the at least one misfire template T_{misfire_a}, T_{misfire_b} may thereafter be utilized for misfire detection, without any further intentional fuel cutoffs. The method 400 shown in the flow chart diagram of figure 4 then comprises the further step of measuring 440a at least one first operation pressure response OP_{resp_a} by utilization of the first pressure sensor 241a during a normal operation of the combustion engine 200. According to an embodiment, each of the at least one first operation pressure response OP_{resp_a} comprises n operation pressure response values OV_{resp_a_1}, OV_{resp_a_1}, ..., OV_{resp_a_n}.

Also, at least one second operation pressure response OP_{resp_b} is measured in a further step 440b by utilization of the second pressure sensor 241b during a normal operation of the combustion engine 200. According to an embodiment, each of the at least one second operation pressure response OP_{resp_b} comprises n operation pressure response values OV_{resp_b_1}, OV_{resp_b_1}, ..., OV_{resp_b_n}.

Then, at least one operation pressure measure OPMₐ, OPM_{b} is determined 450 based on the at least one first operation pressure response OP_{resp_a} and the at least one second operation pressure response OP_{resp_b}. For example, at least one first operation pressure measure OPMₐ is determined based on the at least one first operation pressure response OP_{resp_a}, and at least one second operation pressure measure OPM_{b} is determined based on the at least one second operation pressure response OP_{resp_b}. According to an embodiment, each of the at least one operation pressure measure OPMₐ, OPM_{b} comprises n operation pressure values OPV_{a_1}, OPV_{a_1}, ..., OPV_{a_n}, OPV_{b_1}, OPV_{b_1} ,..., OPV_{b_n}.

According to an embodiment, a combined operation pressure measure OPM is determined based on both of the at least one first operation pressure response OP_{resp_a} and the at least one second operation pressure response OP_{resp_b}. The combined operation pressure measure OPM may then be compared to the above mentioned combined combined misfire template T_{misfire} in order to detect engine misfire.

Here, the one or more operation pressure values OPVₐ, OPV_{b} of one or more of the at least one operation pressure measure OPMₐ, OPM_{b} are associated 451 with an engine crank angle α, an engine speed ω, and/or an engine load L of the combustion engine 200. Thus, each of the n operation pressure values OPV_{a_1}, OPV_{a_1}, ..., OPV_{a_n}; OPV_{b_1}, OPV_{b_1}, ..., OPV_{b_n} is associated 451 with an engine crank angle α, an engine speed ω, and/or an engine load L.

At least one combustion engine misfire may then be detected in a further step 460 based on the at least one operation pressure measure OPMₐ, OPM_{b} and the at least one misfire template T_{misfire_a}, T_{misfire_b}, respectively. For example, the at least one first operation pressure measure OPMₐ may be compared with the at least one first misfire template T_{misfire_a}, and, the at least one second operation pressure measure OPM_{b} may compared with the at least one second misfire template T_{misfire_b}.

According to an embodiment, one or more operation pressure values OPVₐ, OPV_{b} of one or more of the at least one operation pressure measure OPMₐ, OPM_{b} may be normalized 452, thereby determining 450 the at least one operation pressure measure OPMₐ, OPM_{b} as at least one normalized operation pressure measure OPM_{a_norm}, OPM_{b_norm}.

According to an embodiment, the detection 460 of the at least one combustion engine misfire comprises the further step of determining 461 one or more differences D₁, D₂, .. Dₙ between one or more operation pressure values OPVₐ, OPV_{b} of one or more of the at least one operation pressure measure OPMₐ, OPM_{b} and one or more corresponding template pressure values V_{temp_a}, V_{temp_b} of one or more of the at least one misfire template T_{misfire_a}, T_{misfire_b}. For example, a first difference value D_{a_1} is determined between a first operation pressure value OPV_{a_1} of a first operation pressure measure OPM_{a_1} and a first corresponding template pressure value V_{temp_a_1} of a first misfire template T_{misfire_a}, and so on for the n operation pressure values OPVₐ, OPV_{b} and template pressure values V_{temp_a}, V_{temp_b}, respectively.

The detection 460 of the at least one combustion engine misfire also comprises the further step 462 of comparing the one or more differences D₁, D₂, .. Dₙ with one or more misfire difference thresholds D_{1_th}, D_{2_th}, ..., D_{n_th}, respectively. Thus, the first difference D₁ is compared to a first difference threshold D_{1_th}, and so on. If at least one of the one or more differences D₁, D₂, .. Dₙ is smaller than its corresponding difference threshold D_{1_th}, D_{2_th}, ..., D_{n_th}, and/or if a sum of the one or more differences D₁, D₂, .. Dₙ is smaller than a sum of the corresponding difference thresholds D_{1_th}, D_{2_th}, ..., D_{n_th}, then it is determined that the at least one operation pressure measure OPMₐ, OPM_{b} is close to the at least one misfire template T_{misfire_a}, T_{misfire_b}, which means that a misfire of the combustion engine is detected 460.

According to an embodiment, the one or more misfire difference thresholds D_{1_th}, D_{2_th}, ..., D_{n_th} are determined by adjusting one or more already existing difference thresholds D_{1_th_exist}, D_{2_th_exist}, ..., D_{n_th_exist} during a normal operation of the combustion engine 200. The one or more already existing difference thresholds D_{1_th_exist}, D_{2_th_exist}, ..., D_{n_th_exist} are then adjusted based on a comparison of the at least one determined misfire template T_{misfire_a}, T_{misfire_b} and at least one already existing misfire template T_{misfire_a_exist}, T_{misfire_b_exist}. For example, the one or more already existing difference thresholds D_{1_th_exist}, D_{2_th_exist}, ..., D_{n_th_exist} may here be adjusted in the same or similar way as the corresponding at least one already existing misfire template T_{misfire_a_exist}, T_{misfire_b_exist} is adjusted 433 in order to determine 430 the at least one misfire template T_{misfire_a}, T_{misfire_b}.

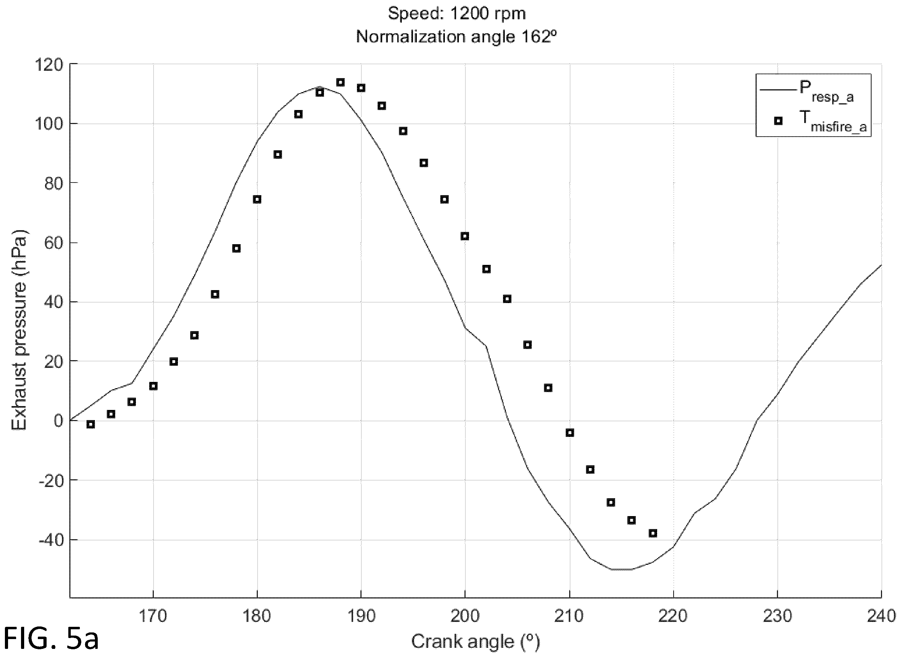

Figures 5a-f show some non-limiting examples of the herein described first misfire pressure response P_{resp_a}, second misfire pressure response P_{resp_b}, at least one misfire template T_{misfire_a}, T_{misfire_b}, first operation pressure response OP_{resp_a}, second operation pressure response OP_{resp_b}, at least one operation pressure measure OPMₐ, OPM_{b}, and one or more differences D₁, D₂, .. Dₙ. As understood by a skilled person, the data presented in figures 5a-f are only illustrated to help explain the principles of the herein presented aspects and embodiments. The herein presented aspects and embodiments are generally applicable for essentially any suitable data set, determined for essentially any suitable number of revolutions, for any suitable crank angles, and for any suitable normalizations.

Figure 5a shows an example of a first misfire pressure response P_{resp_a} of a first cylinder of an example engine comprising six cylinders. The first misfire pressure response P_{resp_a} is sensed by a first sensor at a first bank for the first to third cylinders, and is the result of the at least one fuel cutoff at the engine speed 1200 rpm. Figure 5a shows the first misfire pressure response P_{resp_a} as a solid line, and a corresponding first misfire template T_{misfire_a} as dots, where each of the curves is a function of the crank angle. The values/curves are normalized against the pressure at the crank angle 162°, such that the curve values are 0 at the crank angle 162°.

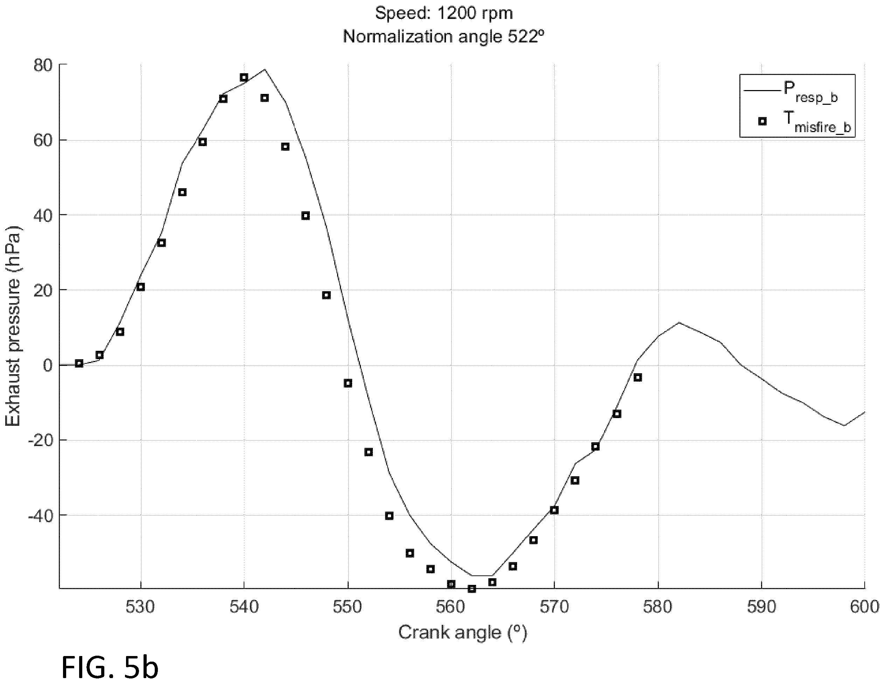

Figure 5b shows an example of a second misfire pressure response P_{resp_b} of a sixth cylinder of the same six cylinder example engine. The second misfire pressure response P_{resp_b} is sensed by a second sensor at a second bank for the fourth to sixth cylinders, and is the result of the at least one fuel cutoff at the engine speed 1200 rpm. Figure 5b shows the second misfire pressure response P_{resp_b} as a solid line, and a corresponding second misfire template T_{misfire_b} as dots, where each of the curves is a function of the crank angle. The values/curves are normalized against the pressure at the crank angle 522°, such that the curve values are 0 at the crank angle 522°.

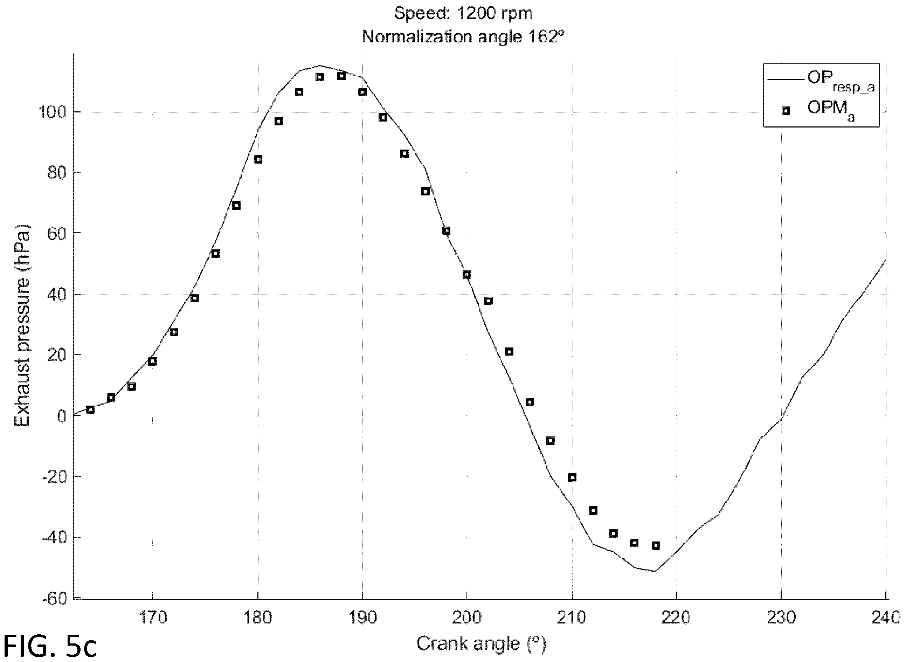

Figure 5c shows a first operation pressure response OP_{resp_a} of the first cylinder of the six cylinder engine sensed by the first sensor as a solid line, and a corresponding first operation pressure measure OPMₐ as dots, where the first operation pressure measure OPMₐ is determined based on the first operation pressure response OP_{resp_a}. The values/curves are normalized against the pressure at the crank angle 162°.

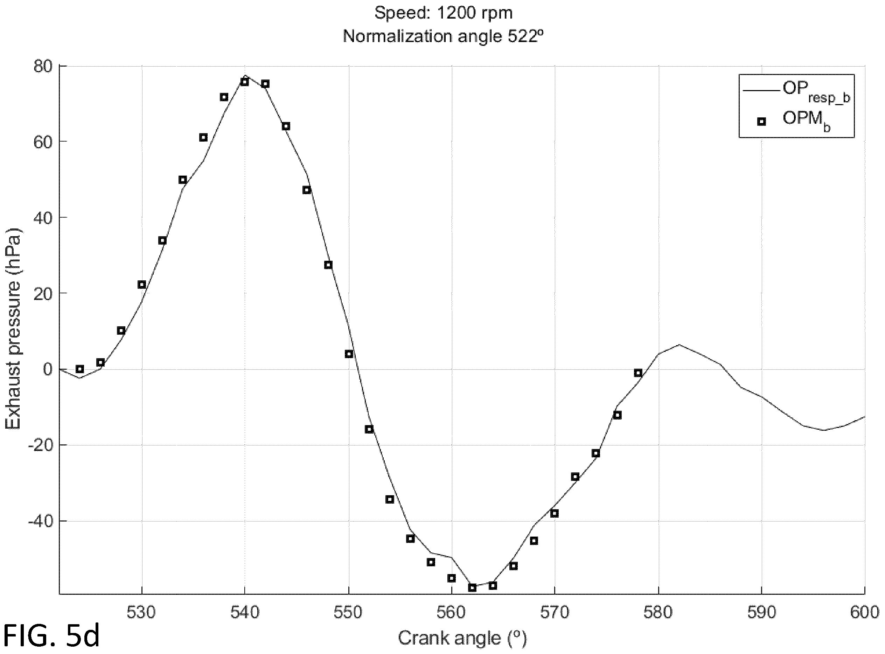

Figure 5d shows a second operation pressure response OP_{resp_b} of the sixth cylinder of the six cylinder engine sensed by the second sensor as a solid line, and a corresponding second operation pressure measure OPM_{b} as dots, where the second operation pressure measure OPM_{b} is determined based on the second operation pressure response OP_{resp_b}. The values/curves are normalized against the pressure at the crank angle 522°.

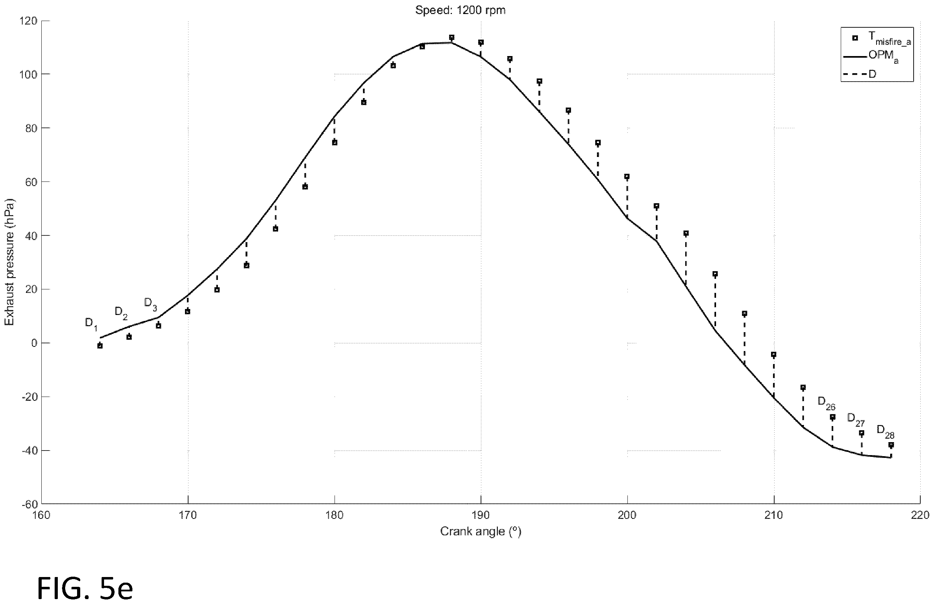

Figure 5e shows some example differences D₁, D₂, D₃, ..., D₂₆, D₂₇, D₂₈ between some of the test pressure values of the first operation pressure measure OPMₐ and corresponding template pressure values of the first misfire template T_{misfire_a} associated with the first cylinder being sensed by the first sensor.

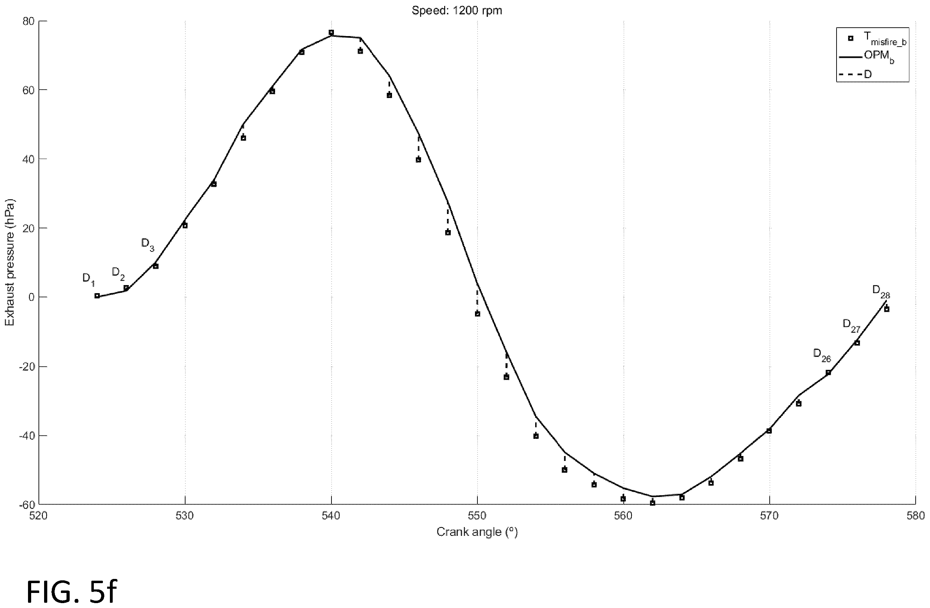

Figure 5f shows some example differences D₁, D₂, D3₁, ..., D₂₆, D₂₇, D₂₈ between some of the test pressure values of the second operation pressure measure OPM_{b} and corresponding template pressure values of the second misfire template T_{misfire_b} associated with the sixth cylinder being sensed by the second sensor.

According to an aspect, a system 600 for a combustion engine 200 of a vehicle 100 is presented. As described above, the combustion engine 200 comprises four or more cylinders 220a-h divided into a first group 225a of two or more cylinders 220a-d connected to a first exhaust gas manifold 240a comprising a first pressure sensor 241a, and a second group 225b of two or more cylinders 220e-h connected to a second exhaust gas manifold 240b comprising a second pressure sensor 241b.

The system 600 comprises a control unit 500, which is configured to induce 410 at least one fuel cutoff for at least one 220a of the four or more cylinders 220a-h during a normal operation of the combustion engine 200. The control unit 500 is further configured to measure 420a at least one first misfire pressure response P_{resp_a} resulting from the at least one fuel cutoff by utilization of the first pressure sensor 241a. The control unit 500 is further configured to measure 420b at least one second misfire pressure response P_{resp_b} resulting from the at least one fuel cutoff by utilization of the second pressure sensor 241b. The control unit 500 is further configured to determine 430 at least one misfire template T_{misfire_a}, T_{misfire_b} specifically for the combustion engine 200 individual based on the at least one first misfire pressure response P_{resp_a} and the at least one second misfire pressure response P_{resp_b}.

According to an aspect, a vehicle 100 comprising a combustion engine 200 and a herein described system 600 is presented.

A person skilled in the art will realise that a method for treatment of an exhaust stream according to the present invention may also be implemented in a computer program, which when executed in a computer will cause the computer to execute the method. The computer program usually forms a part of a computer program product 503, wherein the computer program product comprises a suitable digital non-volatile / permanent / persistent / durable storage medium on which the computer program is stored. Said non-volatile/permanent/persistent/durable computer readable medium consists of a suitable memory, e.g.: ROM (Read-Only Memory), PROM (Programmable Read-Only Memory), EPROM (Erasable PROM), Flash, EEPROM (Electrically Erasable PROM), a hard disk device, etc.

Figure 5 schematically shows a control unknit/device 500. The control device 500 comprises a calculation unit 501, which may consist of essentially a suitable type of processor or microcomputer, e.g. a circuit for digital signal processing (Digital Signal Processor, DSP), or a circuit with a predetermined specific function (Application Specific Integrated Circuit, ASIC). The calculation unit 501 is connected to a memory unit 502, installed in the control device 500, providing the calculation device 501 with e.g. the stored program code and/or the stored data, which the calculation device 501 needs in order to be able to carry out calculations. The calculation unit 501 is also set up to store interim or final results of calculations in the memory unit 502.

Further, the control device 500 is equipped with devices 511, 512, 513, 514 for receiving and sending of input and output signals, respectively. These input and output signals may contain wave shapes, pulses, or other attributes, which may be detected as information by the devices 511, 513 for the receipt of input signals, and may be converted into signals that may be processed by the calculation unit 501. These signals are then provided to the calculation unit 501. The devices 512, 514 for sending output signals are arranged to convert the calculation result from the calculation unit 501 into output signals for transfer to other parts of the vehicle's control system, and/or the component(s) for which the signals are intended.

Each one of the connections to the devices for receiving and sending of input and output signals may consist of one or several of a cable; a data bus, such as a CAN (Controller Area Network) bus, a MOST (Media Oriented Systems Transport) bus, or any other bus configuration; or of a wireless connection.

A person skilled in the art will realise that the above-mentioned computer may consist of the calculation unit 501, and that the above-mentioned memory may consist of the memory unit 502.

Generally, control systems in modern vehicles consist of a communications bus system, consisting of one or several communications buses to connect a number of electronic control devices (ECUs), or controllers, and different components localised on the vehicle. Such a control system may comprise a large number of control devices, and the responsibility for a specific function may be distributed among more than one control device. Vehicles of the type shown, thus often comprise significantly more control devices than what is shown in Figures 1, 3 and 5, which is well known to a person skilled in the art within the technology area.

As a person skilled in the art will realise, the control device 500 in figure 5 may comprise or be comprised in one or several of the control devices of figures 1, 3 and, respectively.

The present invention, in the embodiment shown, is implemented in the control device 500. The invention may, however, also be implemented wholly or partly in one or several other control devices, already existing in the vehicle, or in a control device dedicated to the present invention.

The herein disclosed aspects and embodiments of the present invention may be implemented by the one or more herein mentioned control units or processing arrangements 500. The invention can also, however, be implemented wholly or partially in one or more other control units already present in the vehicle, or in some control unit dedicated to the present invention.

Here and in this document, control units, control entities or processing arrangements are sometimes described as being arranged for performing the methods and/or steps 410, 420a, 420b, 430, 431, 432, 433, 434, 440a, 440b, 450, 451, 452, 460, 461, 462 according to the invention. This also includes that the units, entities or processing arrangements are designed to and/or configured to perform these method steps. One or more control entities 610, 620a, 620b, 630, 631, 632, 633, 634, 640a, 640b, 650, 651, 652, 660, 661, 662 may be arranged for performing the methods and/or steps. Such entities 610, 620a, 620b, 630, 631, 632, 633, 634, 640a, 640b, 650, 651, 652, 660, 661, 662 may be arranged as separate entities, or may be logically separated but physically implemented in the same unit, or may be both logically and physically arranged together. These control entities 610, 620a, 620b, 630, 631, 632, 633, 634, 640a, 640b, 650, 651, 652, 660, 661, 662 may for example correspond to groups of instructions, which can be in the form of programming code, that are input into, and are utilized by a processor/computing unit 501 when the entities are active and/or are utilized for performing its method steps, respectively.

A person skilled in the art will also realise that the above exhaust treatment system may be modified according to the different embodiments of the method according to the invention. In addition, the invention relates to the motor vehicle 100, for example a car, a truck or a bus, or another unit comprising at least one exhaust treatment system according to the invention, such as for example a vessel.

The present invention is not limited to the embodiments of the invention described above, but relates to and comprises all embodiments within the scope of the enclosed independent claims.

## Claims

1. A method (400) for a combustion engine (200) of a vehicle (100), the combustion engine (200) comprising four or more cylinders (220a-h) divided into:
- a first group (225a) of two or more cylinders (220a-d) connected to a first exhaust gas manifold (240a), the first exhaust gas manifold comprising a first pressure sensor (241a); and
- a second group (225b) of two or more cylinders connected to a second exhaust gas manifold (240b), the second exhaust gas manifold comprising a second pressure sensor (241b); wherein
the method (400) comprises a control unit (500) performing the following steps:
- inducing (410) at least one fuel cutoff for at least one (220a) of the four or more cylinders (220a-h) during a normal operation of the combustion engine (200);
- measuring (420a) at least one first misfire pressure response P_{resp_a} resulting from the at least one fuel cutoff by utilization of the first pressure sensor (241a);
- measuring (420b) at least one second misfire pressure response P_{resp_b} resulting from the at least one fuel cutoff by utilization of the second pressure sensor (241b);
- determining (430) at least one misfire template T_{misfire_a}, T_{misfire_b} specifically for the combustion engine (200) individual based on the at least one first misfire pressure response P_{resp_a} and the at least one second misfire pressure response P_{resp_b}.

2. The method (400) as claimed in claim 1, further comprising:
- measuring (440a) at least one first operation pressure response OP_{resp_a} by utilization of the first pressure sensor (241a) during a normal operation of the combustion engine (200);
- measuring (440b) at least one second operation pressure response OP_{resp_b} by utilization of the second pressure sensor (241b) during a normal operation of the combustion engine (200);
- determining (450) at least one operation pressure measure OPMₐ, OPM_{b} based on the at least one first operation pressure response OP_{resp_a} and the at least one second operation pressure response OP_{resp_b};
- detecting (460) at least one combustion engine misfire based on the at least one operation pressure measure OPMₐ, OPM_{b} and the at least one misfire template T_{misfire_a}, T_{misfire_b}.

3. The method (400) as claimed in claim 2, wherein the determination (450) of the at least one operation pressure measure OPMₐ, OPM_{b} comprises:
- associating (451) one or more operation pressure values OPVₐ, OPV_{b} of one or more of the at least one operation pressure measure OPMₐ, OPM_{b} with one or more in the group of:
- an engine crank angle (α);
- an engine speed w; and
- an engine load .

4. The method (400) as claimed in any one of claims 2-3, wherein the determination (450) of the at least one operation pressure measure OPMₐ, OPM_{b} comprises:
- normalizing (452) one or more operation pressure values OPVₐ, OPV_{b} of one or more of the at least one operation pressure measure OPMₐ, OPM_{b}.

5. The method (400) as claimed in any one of claims 2-4, wherein the detection (460) of the at least one combustion engine misfire comprises:
- determining (461) one or more differences D₁, D₂, .. Dₙ between one or more operation pressure values OPVₐ, OPV_{b} of one or more of the at least one operation pressure measure OPMₐ, OPM_{b} and one or more corresponding template pressure values V_{temp_a}, V_{temp_b} of one or more of the at least one misfire template T_{misfire_a}, T_{misfire_b}; and
- comparing (462) the one or more differences D₁, D₂, .. Dₙ with one or more misfire difference thresholds D_{1_th}, D_{2_th}, ..., D_{n_th}, respectively.

6. The method (400) as claimed in claim 5, wherein the one or more misfire difference thresholds D_{1_th}, D_{2_th}, ..., D_{n_th} are determined by adjusting one or more already existing difference thresholds D_{1_th_exist}, D_{2_th_exist}, ..., D_{n_th_exist} during a normal operation of the combustion engine (200) based on a comparison of the at least one determined misfire template T_{misfire_a}, T_{misfire_b} and at least one already existing misfire template T_{misfire_a_exist}, T_{misfire_b_exist}.

7. The method (400) as claimed in any one of claims 1-6, wherein each of the at least one fuel cutoff comprises a fuel cutoff for one (220a) of the four or more cylinders (220a-h) of the combustion engine (200).

8. The method (400) as claimed in any one of claims 1-6, wherein each of the at least one fuel cutoff comprises a fuel cutoff for two or more (220a, 220e) of the four or more cylinders (220a-h) of the combustion engine (220).

9. The method (400) as claimed in any one of claims 1-8, wherein the determination (430) of the at least one misfire template T_{misfire_a}, T_{misfire_b} comprises:
- associating (431) one or more template pressure values V_{temp_a}, V_{temp_b} of one or more of the at least one misfire template T_{misfire_a}, T_{misfire_b} with one or more in the group of:
- an engine crank angle (α);
- an engine speed w; and
- an engine load.

10. The method (400) as claimed in any one of claims 1-9, wherein the determination (430) of the at least one misfire template T_{misfire_a}, T_{misfire_b} comprises:
- normalizing (432) one or more template pressure values V_{temp_a}, V_{temp_b} of one or more of the at least one misfire template T_{misfire_a}, T_{misfire_b}.

11. The method (400) as claimed in any one of claims 1-10, wherein the determination (430) of the at least one misfire template T_{misfire_a}, T_{misfire_b} comprises:
- adjusting (433) at least one already existing misfire template T_{misfire_a_exist}, T_{misfire_b_exist} based on the at least one first misfire pressure response P_{resp_a} and the at least one second misfire pressure response P_{resp_b}.

12. The method (400) as claimed in claim 11, wherein the adjustment (433) of the at least one already existing misfire template T_{misfire_a_exist}, T_{misfire_b_exist} comprises:
- calculating (434) one or more moving averages of one or more template pressure values V_{temp_a_exist}, V_{temp_b_exist} of one or more of the at least one already existing misfire template T_{misfire_a_exist}, T_{misfire_b_exist}, one or more first misfire pressure values V_{resp_a} of one or more of the at least one first misfire pressure response P_{resp_a}, and one or more second misfire pressure values V_{resp_b} of one or more of the at least one second misfire pressure response P_{resp_b}, respectively.

13. The method (400) as claimed in any one of claims 11-12, wherein the at least one already existing misfire template T_{misfire_a_exist}, T_{misfire_b_exist} has been determined by utilization of one in the group of:
- at least one induced fuel cutoff for at least one (220a) of the four or more cylinders (220a-h) during normal operation of the combustion engine (200);
- at least one induced fuel cutoff for at least one (220a) of the four or more cylinders (220a-h) in a workshop; and
- at least one induced fuel cutoff for at least one (220a) of the four or more cylinders (220a-h) during production of the combustion engine (200).

14. The method (400) as claimed in any one of claims 1-12, wherein the normal operation of the combustion engine (200) comprises one or more in the group of:
- the vehicle (100) being propelled by the combustion engine (200); and
- the combustion engine (200) idling in the still standing vehicle (100).

15. A computer program comprising instructions which, when the program is executed by a computer, cause the computer to carry out the method according to any one of claims 1-14.

16. A computer-readable medium comprising instructions which, when executed by a computer, cause the computer to carry out the method according to any one of claims 1-14.

17. A system (600) for a combustion engine (200) of a vehicle (100), the combustion engine (200) comprising four or more cylinders (220a-h) divided into:
- a first group (225a) of two or more cylinders (220a-d) connected to a first exhaust gas manifold (240a), the first exhaust gas manifold (240a) comprising a first pressure sensor (241a); and
- a second group (225b) of two or more cylinders (220e-h) connected to a second exhaust gas manifold (240b), the second exhaust gas manifold comprising a second pressure sensor (241b); the system (600) comprising a control unit (500) configured to:
- induce (410) at least one fuel cutoff for at least one (220a) of the four or more cylinders (220a-h) during a normal operation of the combustion engine (200);
- measure (420a) at least one first misfire pressure response P_{resp_a} resulting from the at least one fuel cutoff by utilization of the first pressure sensor (241a);
- measure (420b) at least one second misfire pressure response P_{resp_b} resulting from the at least one fuel cutoff by utilization of the second pressure sensor (241b);
- determine (430) at least one misfire template T_{misfire_a}, T_{misfire_b} specifically for the combustion engine (200) individual based on the at least one first misfire pressure response P_{resp_a} and the at least one second misfire pressure response P_{resp_b}.

18. A vehicle (100) comprising:
- a combustion engine (200); and
- a system (600) as claimed in claim 17.
